# EUROPEAN PATENT APPLICATION

(11) **EP 4 357 995 A1**
(43) Date of publication of application: **24.04.2024**
(21) Application number: 23204961.9
(22) Date of filing: 20.10.2023
(51) Int. Cl.: G06Q 10/08, B63B 25/00

(54) **A DETACHABLE SMART CONTAINER**

(30) Priority: 23.10.2022 IN 202241054469
(71) Applicant: ETO MOTORS PVT LTD., Madhapur-500081, Hyderabad (IN); KETO MOTORS PVT. LTD., Secunderabad-500003, Telengana (IN)
(72) Inventor: KUMAR MEDIMI, Raj, 500081 Hyderabad (IN)
(74) Representative: Ström & Gulliksson AB

(57) **Abstract**

The present invention provides a detachable smart container **(1)** which is composed of a housing body **(2)** having at least one door **(2')** and incorporates an array of sensors seamlessly which is integrated into the housing body **(2)** to measure a set of parameters. A plurality of modules are integrated into the detachable smart container **(1)** and the modules include but not limited to a smart lock module **(6),** which relays real-time information about the detachable smart container's door status, a monitoring module **(7)** configured to meticulously scrutinize the recorded parameters, promptly identifying any instances of abnormal activity, and even predicting an estimated time of arrival for the container. Lastly, an alarm module **(8)** is present to notify users about any identified abnormal activities in the detachable smart container.

## Description

### FIELD OF THE INVENTION

The present invention generally relates to the field of smart containers. More particularly, the present invention relates to a detachable smart container equipped with a global positioning system (GPS), a weight sensor, a temperature sensor and a smart lock for easy monitoring or tracking of the smart container.

### BACKGROUND OF THE INVENTION

As the digital revolution is taking place, the supply chain requirements of people are changing along with it. Nowadays, the shippers require real-time information about the containers to provide estimated time of arrival to their customers. An improved visibility is required to identify the inbound flow of goods to satisfy higher demands and the supply chain stakeholders want to track the information of the exact location of their goods while in transit and the condition of their goods at any given time. In order to achieve entirely transparent supply chains, there exists a need to capture inefficiencies and understand delays through aggregating real-time data. Moreover, the shippers cannot expect the fastest, safest and importantly, the ecological routes for their shipments without visibility and tracking of shipment. Therefore, most of the companies are looking for solutions, which provide containers visibility beyond monitoring the milestones tracked by their logistics service providers.

In order to find a real-time monitoring solution for the cargo containers, it is essential that the shippers select a smart container or an intermodal cargo monitoring solution. The smart container is permanently equipped with a tracking device. The intermodal cargo monitoring solution provides intelligent, sensor-equipped devices, which are easily added to any cargo container. The real-time monitoring of cargo with smart containers or smart devices is making the supply chains more transparent, reliable, agile, secure, resilient, connected and sustainable. The real-time monitoring of cargo eliminates milestones-based visibility from the supply chain as they provide data on the location and condition of the goods in transit. The sensors are attached to the cargo and provides a real-time information on the geographic position as well as the state of the cargo directly to the shippers.

The shipping containers are a reusable transport and storage unit for moving products and raw materials between locations or countries. At present, the shipping containers are tracked manually, which creates a lot of delays in delivery of shipment as the real-time location of the shipping containers are not available with the shippers. The manual tracking process is also costly, inefficient and slow. Many times such shipping containers face the threat of theft and most often theft occurs in these shipping containers as there is no way to find out about such activities going on inside the shipping containers. Apart from manual tracking of shipping containers, a global positioning system (GPS) is installed on the shipping containers to track the location, however said system still lacks in providing the real-time condition of the shipping containers and whether any theft has occurred inside the shipping container. Further, the real-time weight and temperature of shipping containers cannot be traced through the global positioning system (GPS) alone.

US4439094A discloses the wheeled frame remaining after removal therefrom of the detachable cargo container, is gripped by clamping mechanism of a carrying unit mounted on a tractor or lift truck, then elevated above the ground and pivoted from its normal horizontal disposition to vertical position, and then transported to a multiple storage unit where it is deposited and retained in said vertical position removably in one of a plurality of compartments making up the storage unit. A plurality of such wheeled frames may be stored in this manner by deposit in successive ones of the compartments, and they are removed from the compartment in the reverse order of deposit. The main drawback of this invention is the use of clamping mechanism as the clamping mechanism creates vibration and noise if not properly secured thus making it difficult to tighten sufficiently. Moreover, the clamping mechanism requires a large clamping force, which is created because of the grip between the inner and outer rings leading to slight deformation in shafts and this creates problems with certain types of machinery, especially if it is high-speed or highly precise equipment.

US7339469B2**,** discloses a system for monitoring a container for transporting cargo. The system includes an onboard device attached to the container and a central computer system. The central computer system processes alerts transmitted by the onboard device. The onboard device includes a processor/sensor component and an antenna component. The processor/sensor component comprises a processor for controlling the device. The processor/sensor component also includes one or more sensor in communication with the processor for sensing container conditions. A satellite modem in the processor/sensor component transmits alerts relating to container conditions and other satellite communications. The antenna component includes a satellite antenna, which is connected to the satellite modem. The main drawback of this invention is the use of short range radio frequency for tracking as the radio frequency waves are available both in line of sight (LOS) and non-line of sight (NLOS) regions of transmitter, therefore it is easily intruded by the hackers and crucial personal and/or official data is decoded for malicious motives. In order to avoid this situation, radio frequency wave based transmission is used with highly secured algorithms, which makes the system prone to various internal errors. Moreover, the radio frequency (RF) signal are also modulated either using frequency hopping and/or spread spectrum techniques to avoid this kind of eavesdropping.

Generally, the traditional means of tracking the progress of shipping containers are heavily manual and unreliable as the information provided is consistently outdated, which makes it difficult to accurately predict the estimated time of arrival of said containers. Poor prediction of estimated time of arrival mostly leads to congestion at the receiving stations and delays in unloading the cargo for the next stage in the supply chain. The manual data collection process is very costly, prone to error, incomplete and involves the risk of fraud. Another issue related to traditional shipping container happens when they arrive at their destination and are unloaded at the destination. Those containers are sometimes delivered to the wrong destination and such problems are usually discovered months after the occurrence of such wrong delivery.

Therefore, due to aforementioned drawbacks, there is a need to provide a detachable, cost effective, user friendly and easily traceable smart container.

### OBJECT OF THE INVENTION

The main object of the present invention is to provide a detachable smart container, in which a global positioning system (GPS), a weight sensor and a temperature sensor are provided to monitor the detachable smart container.

Another object of the present invention is to provide a detachable smart container, in which a smart locking mechanism is provided to track geolocation, identify temperature fluctuations and set geo-fencing.

Yet another object of the present invention is to provide a detachable smart container, wherein estimated time of arrival of the detachable smart container is easily predicted with accuracy.

Yet another object of the present invention is to provide a detachable smart container, in which a smart locking system is provided to track the real-time status of door opening and closing along with timestamps to show the opening and closing time of the door.

Still another object of the present invention is to provide a detachable smart container, which easily tracks any unusual activity including theft, tampering and such other activities.

### SUMMARY OF THE INVENTION

The present invention relates to a detachable smart container, in which a global positioning system (GPS), a weight sensor, and a temperature sensor are provided to monitor the detachable smart container and a smart locking mechanism is incorporated in the system to track geolocation, identify temperature fluctuations and set geo-fencing.

In an embodiment, the present invention provides a detachable smart container, comprising of a monitoring unit, a weight sensor, a temperature sensor, a geo-fencing unit, an user interface, a smart lock module and an alarm module, wherein said monitoring system includes a global positioning system (GPS) that is configured to track said detachable smart container and provide geo-location of said detachable smart container, said weight sensor is configured to provide real-time weight of said detachable container, said temperature sensor is configured to provide real-time temperature of said detachable smart container, said geo-fencing unit is configured to set geographical boundaries to said detachable smart container, said user interface notifies a user via notification when said detachable container moves out of set geographical boundaries, said smart lock module provides a real-time tracking status of door opening and closing of said detachable smart container and said alarm module provide notification(s) to said user via said user interface when any unusual activity is detected in said smart detachable container.

In another embodiment, the present invention provides a detachable smart container in which the monitoring unit is configured to predict an estimated time of arrival of the detachable smart container. The smart lock module provides timestamps of opening and closing time of door of said detachable smart container.

The present invention provides a detachable smart container, in which a global positioning system (GPS), a weight sensor, and a temperature sensor are provided to monitor the detachable smart container and a smart locking mechanism is incorporated in the system to track geolocation, identify temperature fluctuations and set geo-fencing, wherein estimated time of arrival of the detachable smart container is easily predicted through installation of a global positioning system on said detachable smart container.

The above objects and advantages of the present invention will become apparent from the hereinafter set forth brief description of the drawings, detailed description of the invention, and claims appended herewith.

### BRIEF DESCRIPTION OF THE DRAWING

An understanding of the detachable smart container of the present invention may be obtained by reference to the following drawing:
**Figure 1** is a block diagram of detachable smart container according to an embodiment of the present invention.
**Figure 2** is a perspective view of detachable smart container according to an embodiment of the present invention.
**Figure 3** is a pictorial view of detachable smart container according to an embodiment of the present invention.

### DETAILED DESCRIPTION OF THE INVENTION

The present invention will now be described hereinafter with reference to the accompanying drawings in which a preferred embodiment of the invention is shown. This invention may, however, be embodied in many different forms and should not be construed as being limited to the embodiment set forth herein. Rather, the embodiment is provided so that this disclosure will be thorough, and will fully convey the scope of the invention to those skilled in the art.

Many aspects of the invention can be better understood with references made to the drawings below. The components in the drawings are not necessarily drawn to scale. Instead, emphasis is placed upon clearly illustrating the components of the present invention. Moreover, like reference numerals designate corresponding parts through the several views in the drawings. Before explaining at least one embodiment of the invention, it is to be understood that the embodiments of the invention are not limited in their application to the details of construction and to the arrangement of the components set forth in the following description or illustrated in the drawings. The embodiments of the invention are capable of being practiced and carried out in various ways. In addition, the phraseology and terminology employed herein are for the purpose of description and should not be regarded as limiting.

The present invention provides a detachable smart container, in which a global positioning system (GPS), a weight sensor, and a temperature sensor are provided to monitor the detachable smart container and a smart locking mechanism is incorporated in the system to track geolocation, identify temperature fluctuations and set geo-fencing, wherein a smart lock module provides a real-time tracking status of door opening and closing of said detachable smart container.

In an embodiment, the present invention provides a detachable smart container, comprising of a monitoring unit, a weight sensor, a temperature sensor, a geo-fencing unit, an user interface, a smart lock module and an alarm module, wherein said monitoring system includes a global positioning system (GPS) that is configured to track said detachable smart container and provide geo-location of said detachable smart container, said weight sensor is configured to provide real-time weight of said detachable container, said temperature sensor is configured to provide real-time temperature of said detachable smart container, said geo-fencing unit is configured to set geographical boundaries to said detachable smart container, said user interface notifies a user via notification when said detachable container moves out of set geographical boundaries, said smart lock module provides a real-time tracking status of door opening and closing of said detachable smart container and said alarm module provide notification(s) to said user via said user interface when any unusual activity is detected in said smart detachable container.

In another embodiment, the present invention provides a detachable smart container in which the monitoring unit is configured to predict an estimated time of arrival of the detachable smart container. The smart lock module provides timestamps of opening and closing time of door of said detachable smart container.

Therefore, the present invention provides a detachable smart container, in which a global positioning system (GPS), a weight sensor, and a temperature sensor are provided to monitor the detachable smart container and a smart locking mechanism is incorporated in the system to track geolocation, identify temperature fluctuations and set geo-fencing, wherein estimated time of arrival of the detachable smart container is easily predicted through installation of a global positioning system on said detachable smart container.

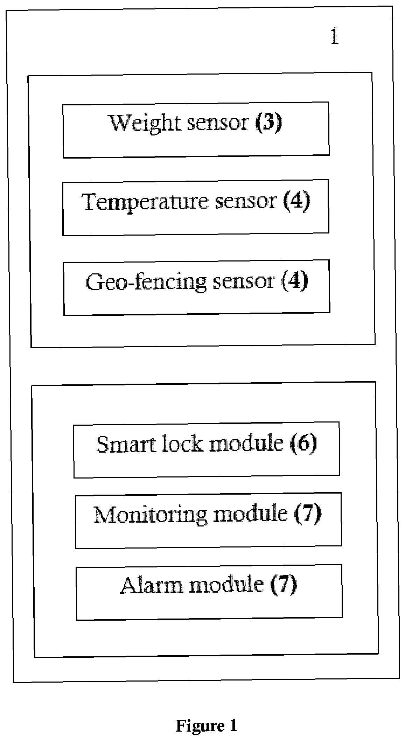

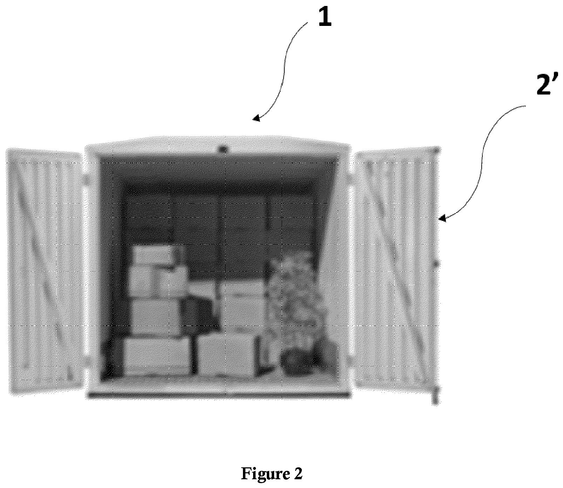

Referring to **Figure 1****,** a block diagram of the detachable smart container **(1)** is depicted. The detachable smart container **(1)** is composed of a housing body **(2)** having at least one door **(2')** (as depicted in **Figure 2**) and incorporates an array of sensors seamlessly which is integrated into the housing body **(2).** These sensors function in real-time to measure a set of parameters. The sensors include but not limited to a weight sensor **(3)** responsible for continuous weight monitoring, a temperature sensor **(4)** for real-time temperature measurements, and a geo-fencing unit **(5)** that establishes and maintains real-time geographical boundaries. A plurality of modules are integrated into the detachable smart container **(1)** and the modules include but not limited to a smart lock module **(6),** which relays real-time information about the detachable smart container's door status, a monitoring module **(7)** configured to meticulously scrutinize the recorded parameters, promptly identifying any instances of abnormal activity, and even predicting an estimated time of arrival for the container. Lastly, an alarm module **(8)** is present to notify users about any identified abnormal activities in the detachable smart container.

The plurality of sensors and plurality of modules are connected to an integrated communication module which facilitates a data transmission between said plurality of sensors and said plurality of modules. The interconnectedness of the plurality of sensors and modules within the detachable smart container **(1)** is achieved through the utilization of an integrated communication module. The integrated communication module is responsible for intermediary, streamlining and enhancing the flow of data between the multitude of sensors and the diverse set of modules present in the system. Essentially, it functions as a communication bridge, ensuring efficient and seamless transmission of data across the entire spectrum of sensors and modules. This integration significantly contributes to the overall cohesiveness and effectiveness of the smart container, allowing for synchronized operation and real-time coordination among its various components.

The geo-fencing unit **(5)** is for providing real-time location tracking and monitoring, enabling one or more users to track movement of the detachable smart container **(1)** and location remotely. The geo-fencing unit **(5)** serves as a pivotal feature to enable real-time location tracking and monitoring within the detachable smart container **(1).** The geo-fencing unit **(5)** enables one or more users with the capability to effectively track the movement of detachable smart container **(1)** and pinpoint its precise location from a remote vantage point. Through the geo-fencing unit **(5),** the user gain valuable insights into the container's geographical coordinates and movement in real-time. This functionality enhances the system's transparency and accessibility, allowing users to remotely monitor and manage the position of the detachable smart container **(1),** thus facilitating efficient and secure tracking of the journey of the detachable smart container **(1).**

The monitoring module **(7)** of the smart container system is configured to provide a user interface or web interface, enabling remote monitoring, control, and configuration of various settings and functions within the detachable smart container **(1).** This user interface offers users the convenience of overseeing and managing the operations of the detachable smart container **(1)** from a remote location. Abnormal activities that the monitoring module **(7)** can detect encompass a range of scenarios, including but not limited to abrupt temperature variations, instances of unauthorized door openings, or unexpected fluctuations in weight.

Furthermore, the capabilities of monitoring module extend to the establishment of multiple baseline patterns and trends derived from the parameters it records.

Leveraging historical data and predefined criteria, it employs a diverse array of advanced data analytics techniques and machine learning methods. Additionally, the monitoring module **(7)** possesses the capability to estimate the time of arrival by processing real-time geographical boundary data in conjunction with historical transit information stored within the module, employing predictive techniques to provide this valuable prediction.

Crucially, the monitoring module **(7)** maintains a vigilant watch over the set of parameters, continuously monitoring them for any deviations from the established baseline patterns. Upon promptly identifying any such abnormal activity, it takes immediate action, triggering alerts and notifications to the alarm module **(8).** This consistent and proactive monitoring ensures the timely detection of any abnormal activities within the detachable smart container **(1),** enhancing its overall security and reliability.

The alarm module **(8)** is configured to send one or more notifications via a plurality of communication channels that includes but not limited to SMS, email, and push notifications, to alert the user of any detected abnormal activity or security breach.

The communication channels at the disposal of the alarm module **(8)** are not limited to but may include SMS (Short Message Service), email, and push notifications. Each of these channels plays a distinct role in disseminating alerts to users.

Firstly, SMS notifications offer a direct and immediate means of communication, providing real-time updates and alerts to users through text messages on their mobile devices. This method ensures that users receive important information swiftly, even when they are on the move.

Secondly, email notifications serve as a reliable and comprehensive mode of communication. They deliver detailed notifications to users' email inboxes, offering a structured and documented account of the detected abnormal activity or security breach. Email notifications are valuable for archiving and reference purposes, making them particularly useful for users who prefer a more comprehensive notification format.

Lastly, push notifications are delivered through dedicated mobile apps or web interfaces. These notifications appear as alerts on users' devices, often with a distinctive sound or visual cue, drawing immediate attention to the detected issue. Push notifications are effective for engaging users who are actively using their smart devices and are especially useful for real-time awareness. Collectively, this diversified communication approach ensures that users are promptly informed about any abnormalities or security breaches within the smart container system, enabling swift responses and proactive management of potential issues.

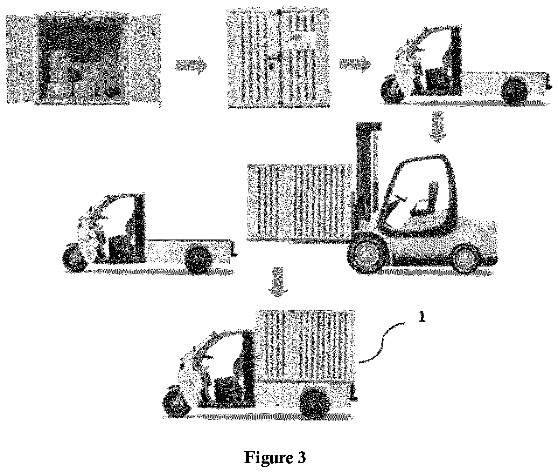

Referring to **Figure 3****,** a pictorial view of the installment process of the detachable smart container **(1)** on a vehicle according to an embodiment is depicted. The vehicle is selected from electric vehicles but not limited to petrol vehicles and other types of automobiles. The detachable smart container **(1)** comprising of a monitoring module **(7),** a weight sensor **(3),** a temperature sensor **(4),** a geo-fencing unit **(5),** and user interface, a smart lock module **(6)** and an alarm module **(8).** The monitoring module **(7)** includes a global positioning system (GPS) that is configured to track said detachable smart container **(1)** and provide geo-location of said detachable smart container **(1).** The weight sensor **(3)** is configured to provide real-time weight of said detachable container **(1).** The temperature sensor **(4)** is configured to provide real-time temperature of said detachable smart container **(1).** The geo-fencing unit **(5)** is configured to set geographical boundaries to said detachable smart container **(1).** The user interface notifies a user via notification when said detachable container **(1)** moves out of set geographical boundaries, further the smart lock module **(6)** provides a real-time tracking status of door opening and closing of said detachable smart container **(1)** and the alarm module **(8)** provides notification(s) to said user via said user interface when any unusual activity is detected in said smart detachable container **(1).**

### EXAMPLE 1

### Working of the Invention

The detachable smart container **(1),** boasts a robust housing body **(2)** with at least one access door **(2'),** offering a balance between security and usability. Within this housing body **(2),** a weight sensor **(3)** continuously monitors the weight of detachable smart container **(1),** ensuring that any unexpected changes in load are immediately detected. Simultaneously, a temperature sensor **(4)** measures the internal temperature in real-time, guaranteeing that the stored items are kept under the desired conditions. These sensors collectively ensure that the container's contents remain intact and within specified parameters.

The detachable smart container **(1)** extends further with the inclusion of a geo-fencing unit **(5).** This unit **(5)** creates and maintains a dynamic geographical boundary around the detachable smart container **(1)** in real-time. This feature is particularly significant as it enables users, whether they are individuals or organizations, to track the precise location remotely. It offers invaluable insights into movements, making it an indispensable tool for logistics and security purposes.

Complementing these sensors are a set of modules that bring intelligence and control to the system. The smart lock module **(6),** for instance, relays real-time information about the status of the door **(2').** This information provides critical data regarding the security and access. The monitoring module **(7)** is equipped with a user-friendly interface, allowing users to remotely monitor, control, and configure various settings and functions of the detachable smart container **(1).** But its capabilities extend beyond mere control; it meticulously scrutinizes the data collected by the sensors. This scrutiny is vital as it enables the module to swiftly identify any abnormal activity within the container. It does so by establishing baseline patterns and trends from the parameters it records, leveraging historical data and predefined criteria through advanced data analytics and machine learning techniques. When any deviation from these established patterns is detected, it promptly triggers alerts and notifications to the alarm module.

The alarm module **(8)** is configured to send notifications through multiple communication channels such as SMS, email, and push notifications, it ensures that users are promptly informed of any abnormal activity or security breaches. This multi-pronged notification system guarantees that critical information reaches users in real-time, allowing them to take immediate action.

Therefore, the present invention provides a detachable smart container, in which a global positioning system (GPS), a weight sensor, and a temperature sensor are provided to monitor the detachable smart container and a smart locking mechanism is incorporated in the system to track geolocation, identify temperature fluctuations and set geo-fencing, wherein estimated time of arrival of the detachable smart container is easily predicted through installation of a global positioning system on said detachable smart container.

Many modifications and other embodiments of the invention set forth herein will readily occur to one skilled in the art to which the invention pertain having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

The foregoing description of embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principals of the invention and its practical application to enable one skilled in the art to utilize the invention in various embodiments and with various modifications as are suited to the particular use contemplated.

## Claims

1. A detachable smart container **(1),** comprising of:
a housing body **(2)** with at least one door **(2');**
a plurality of sensors integrated into said housing body **(2)** for measuring a set of parameters in real time; and
a plurality of modules integrated with said plurality of sensors;
wherein:
said plurality of sensors include a weight sensor **(3)** for continuous weight monitoring of the detachable smart container **(1),** a temperature sensor **(4)** for measuring real time temperature within the detachable smart container **(1),** a geo-fencing sensor **(5)** for defining and maintaining a real-time geographical boundary for the detachable smart container **(1);**
said plurality of modules include a smart lock module **(6),** a monitoring module **(7)** and an alarm module **(8);**
said smart lock module **(6)** to relay a real-time status information regarding the opening and/or closing of the door of the detachable smart container **(1);**
said monitoring module **(7)** is configured to scrutinize said set of parameters recorded by said plurality of sensors to promptly identify any abnormal activity and predict an estimated time of arrival for the detachable smart container **(1);** and
said alarm module **(8)** for notifying a user about the identified abnormal activity.

2. The detachable smart container **(1)** as claimed in claim 1, wherein said plurality of sensors and plurality of modules are connected to an integrated communication module which facilitates a data transmission between said plurality of sensors and said plurality of modules.

3. The detachable smart container **(1)** as claimed in claim 1, wherein said geo-fencing unit **(5)** is for providing real-time location tracking and monitoring, enabling one or more users to track movement of the detachable smart container **(1)** and location remotely.

4. The detachable smart container **(1)** as claimed in claim 1, wherein said monitoring module **(7)** is configured with a user interface or web interface for remote monitoring, control, and configuration of one or more settings and functions of said detachable smart container **(1).**

5. The detachable smart container **(1)** as claimed in claim 1, wherein said abnormal activity include but not limited to abrupt temperature variations, unauthorized door openings, or unexpected weight changes.

6. The detachable smart container **(1)** as claimed in claim 1, wherein said monitoring module **(7)** is configured to establish a plurality of baseline patterns and trends from the set of parameters and a historical data and pre-defined criteria via a plurality of advanced data analytics techniques and machine learning techniques.

7. The detachable smart container **(1)** as claimed in claim 1, wherein said monitoring module **(7)** estimates the time of arrival by processing the real-time geographical boundary and a historical transit information stored with the monitoring module **(7)** via a predictive technique.

8. The detachable smart container **(1)** as claimed in claim 7, wherein said monitoring module **(7)** detect the abnormal activity via continuously monitor the set of parameters for deviations from the established baseline patterns, identifying the abnormal activity promptly and triggering alert to the alarm module **(8)** upon identification of abnormal activity.

9. The detachable smart container **(1)** as claimed in claim 1, wherein said alarm module **(8)** is configured to send one or more notifications via a plurality of communication channels that includes but not limited to SMS, email, and push notifications, to alert the user of any detected abnormal activity or security breach.
